# EUROPEAN PATENT APPLICATION

(11) **EP 4 782 112 A1**
(43) Date of publication of application: **29.07.2026**
(21) Application number: 26150047.4
(22) Date of filing: 02.01.2026
(51) Int. Cl.: B05B 12/26, B05D 1/32, B29C 35/00, F01D 5/00

(54) **INJECTOR SYSTEM FOR MASKING OPENINGS IN COMPONENT**

(30) Priority: 24.01.2025 US 202519036381
(71) Applicant: GE Vernova Technology GmbH, 5400 Baden (CH)
(72) Inventor: SEE, Hian Hian, 628341 Singapore (SG); LOMAS, Jonathan Matthew, Greenville, 29615 (US); SALM, Jacob Andrew, Greenville, 29615 (US); MOK, Chun Wee, 628341 Singapore (SG)
(74) Representative: Freigutpartners IP Law Firm

(57) **Abstract**

An injector system (130) and method for masking a plurality of openings (134) in a component are provided. The injector system includes at least one injector body (132) configured to be positioned within a respective opening. Each injector body includes a radiation transmitting channel (150) and a radiation-curable material passage (160) defined in the injector body adjacent to the radiation transmitting channel. The radiation transmitting channel (150) includes a first terminal end (152) and a second opposing end (154) configured to optically communicate with a source of radiation (138), and the radiation-curable material passage (160) includes a first terminal end (162), and a second opposing end (164) configured to fluidly communicate with a source of radiation-curable material (136). A radiation block (170) is between the channel and the passage to prevent radiation from the channel from entering the passage. The injector system simultaneously injects and cures radiation-curable masking material.

## Description

### TECHNICAL FIELD

The disclosure relates generally to industrial components. More specifically, the herein claimed invention relates to the subject matter set forth in the appended claims.

### BACKGROUND

Industrial components may include a body having one or more hollow cooling passages through which coolant passes to cool the component. The cooling passage(s) may extend to a surface of the industrial component, e.g., a turbine airfoil or nozzle, where coolant exits from a plurality of openings that are in fluid communication with the coolant passage(s). The openings can number in the thousands on larger components.

During manufacture and/or during maintenance of the components it may be necessary to prevent damaging materials from entering the openings to avoid damage to the coolant passages, the openings or other structure of the component. The type of damaging materials that can enter the openings depends on the process(es) at issue. For example, the damaging material(s) may include acid from an acid wash, grit from a grit blasting process, ceramic coatings from a barrier coating process, or other materials.

To prevent damaging material from entering the openings, the openings are temporarily filled by a masking material. The masking material is removed after the process(es) that presents the possibility of damaging material entering the openings is/are completed. The masking material typically includes a radiation-curable material, e.g., ultraviolet light curable material, which is first injected into a center of the openings from outside the component, and then cured by application of radiation, e.g., ultraviolet light, from an exterior of the component. This approach can lead to several issues that prevent the masking material from working properly to protect the openings. For example, the masking material may not cure within the openings away from the exterior surface of the component, may not completely fill the openings, or may not adhere to the inner wall surface of the openings. Consequently, the masking material may not fully mask the openings or may dislodge entirely from the openings, potentially leading to damage to the component.

### BRIEF DESCRIPTION

The herein claimed invention is set forth in the appended claims.

An aspect of the disclosure provides an injector system for masking a plurality of openings in a component, the injector comprising: at least one injector body, or at least a forward portion thereof, configured to be positioned within a respective opening of the plurality of openings, each injector body including: a radiation transmitting channel including a first terminal end proximate, or adjacent, respectively, a forward end of the injector body and a second opposing end configured to optically communicate with a source of radiation; a radiation-curable material passage defined in the injector body adjacent to the radiation transmitting channel, the radiation-curable material passage including a first terminal end proximate, or adjacent, respectively, a forward end of the injector body and a second opposing end configured to fluidly communicate with a source of radiation-curable material; and a first radiation block between the radiation transmitting channel and the radiation-curable material passage, the first radiation block configured to prevent radiation from the radiation transmitting channel from entering the radiation-curable material passage.

Another aspect of the disclosure includes any of the preceding aspects and/or any of the appended claims, and the radiation transmitting channel and the radiation-curable material passage are coaxially arranged relative to one another.

Another aspect of the disclosure includes any of the preceding aspects and/or any of the appended claims, and the radiation-curable material passage is within the radiation transmitting channel, and the system further comprising a second radiation block configured to prevent radiation from exiting from an exterior surface of the radiation transmitting channel into the respective opening, or into a respective opening when the at least forward portion of the respective injector body is positioned within the respective opening, respectively.

Another aspect of the disclosure includes any of the preceding aspects and/or any of the appended claims, and the second radiation block includes a plurality of openings therein allowing radiation from exiting from select locations from the exterior surface of the radiation transmitting channel into the respective opening, or into a respective opening when the at least forward portion of the respective injector body is positioned within the respective opening, respectively.

Another aspect of the disclosure includes any of the preceding aspects and/or any of the appended claims, and the radiation transmitting channel is within the radiation-curable material passage.

Another aspect of the disclosure includes any of the preceding aspects and/or any of the appended claims, and one of the first terminal ends of the radiation transmitting channel and the radiation-curable material passage is upstream of the other of the first terminal ends of the radiation transmitting channel and the radiation-curable material passage, or is set back form the other of the first terminal ends of the radiation transmitting channel and the radiation-curable material passage towards the respective second opposing end, respectively.

The terms upstream and downstream may herein be used in relation to the direction of flow of radiation-curable material, such that downstream means towards a forward end of the respective injector body, or the first terminal ends of the radiation transmitting channel and/or the radiation-curable material passage, respectively, while upstream means away form said forward end of the respective injector body, or the first terminal ends of the radiation transmitting channel and/or the radiation-curable material passage, or towards the respective second ends, respectively.

Another aspect of the disclosure includes any of the preceding aspects and/or any of the appended claims, and the injector body includes a first, upstream, or backward, portion angled relative to a second, downstream, or forward, portion thereof.

Another aspect of the disclosure includes any of the preceding aspects and/or any of the appended claims, and further comprising a controller configured to control dispensing of the radiation-curable material through the first terminal end of the radiation-curable material passage, and control radiation transmission from at least the first terminal end of the radiation transmitting channel to cure the radiation-curable material in the respective opening.

Another aspect of the disclosure includes any of the preceding aspects and/or any of the appended claims, and the controller is configured to temporarily stop radiation transmission from at least the first terminal end of the radiation transmitting channel during dispensing of the radiation-curable material through the first terminal end of the radiation-curable material passage.

Another aspect of the disclosure includes any of the preceding aspects and/or any of the appended claims, and the controller is configured to stop dispensing the radiation-curable material through the first terminal end of the radiation-curable material passage and continue radiation transmission from at least the first terminal end of the radiation transmitting channel.

Another aspect of the disclosure includes any of the preceding aspects and/or any of the appended claims, and further comprising an at least semi-automated positioning system configured to: position the first terminal ends of the injector body within the respective opening, and mask the respective opening by retracting the injector body from the respective opening while dispensing the radiation-curable material from the first terminal end of the radiation-curable material passage and simultaneously cure the radiation-curable material using radiation exiting from at least the first terminal end of the radiation transmitting channel.

Another aspect of the disclosure includes any of the preceding aspects and/or any of the appended claims, and the at least semi-automated positioning system retracts, or is configured to restract, the injector body from the respective opening at a non-parallel angle relative to a centerline of the respective opening.

Another aspect of the disclosure includes any of the preceding aspects and/or any of the appended claims, and the positioning system retracts, or is configured to retract, the injector body from the respective opening along an at least partially non-linear path.

Another aspect of the disclosure includes any of the preceding aspects and/or any of the appended claims, and the at least one injector body includes a plurality of injector bodies configured to be positioned within a respective plurality of openings.

Another aspect of the disclosure includes a method for masking a plurality of openings in a component, the method comprising: repeatedly: positioning at least one injector body, or at least a forward portion thereof, within a respective opening of the plurality of openings, the injector body including: a radiation transmitting channel including a first terminal end proximate, or adjacent, the forward end of the injector body and a second opposing end configured to optically communicate with a source of radiation; a radiation-curable material passage defined in the injector body adjacent to the radiation transmitting channel, the radiation-curable material passage including a first terminal end proximate, or adjacent, the forward end of the injector body and a second opposing end configured to fluidly communicate with a source of radiation-curable material; and a first radiation block between the radiation transmitting channel and the radiation-curable material passage, the first radiation block configured to prevent radiation from the radiation transmitting channel from entering the radiation-curable material passage; and masking at least a portion of the respective opening by retracting the injector body from the respective opening while dispensing the radiation-curable material from the first terminal end of the radiation-curable material passage and cure the radiation-curable material by directing radiation from at least the first terminal end of the radiation transmitting channel.

Another aspect of the disclosure includes any of the preceding aspects and/or any of the appended claims, and the radiation-curable material passage is within the radiation transmitting channel, and further comprising using a second radiation block configured to prevent radiation from exiting from an exterior surface of the radiation transmitting channel into the respective opening.

Another aspect of the disclosure includes any of the preceding aspects and/or any of the appended claims, and the radiation transmitting channel is within the radiation-curable material passage.

Another aspect of the disclosure includes any of the preceding aspects and/or any of the appended claims, and one of the first terminal ends of the radiation transmitting channel and the radiation-curable material passage is upstream of the other of the first terminal ends of the radiation transmitting channel and the radiation-curable material passage, or is set back from the other of the first terminal ends of the radiation transmitting channel and the radiation-curable material passage towards the respective second end, respectively.

Another aspect of the disclosure includes any of the preceding aspects and/or any of the appended claims, and further comprising temporarily stopping radiation transmission from at least the first terminal end of the radiation transmitting channel during dispensing of the radiation-curable material through the first terminal end of the radiation-curable material passage.

Another aspect of the disclosure includes any of the preceding aspects and/or any of the appended claims, and further comprising stopping dispensing the radiation-curable material through the first terminal end of the radiation-curable material passage while continuing radiation transmission from at least the first terminal end of the radiation transmitting channel.

Another aspect of the disclosure includes any of the preceding aspects and/or any of the appended claims, and retracting the injector body from the respective opening occurs at a non-parallel angle relative to a centerline of the respective opening.

Another aspect of the disclosure includes any of the preceding aspects and/or any of the appended claims, and retracting the injector body from the respective opening occurs along an at least partially non-linear path.

Another aspect of the disclosure includes any of the preceding aspects and/or any of the appended claims, and the positioning and the masking includes: first positioning the injector including the injector body within an inner portion of the respective opening of the plurality of openings and first masking of the inner portion of the respective opening; and second positioning the injector including the injector body within an outer portion of the respective opening of the plurality of openings and second masking of the outer portion of the respective opening.

Another aspect of the disclosure includes any of the preceding aspects and/or any of the appended claims, and the masking includes forming a mask portion beyond an exterior surface of the component at the respective opening by retracting the injector body beyond the exterior surface while dispensing the radiation-curable material from the first terminal end of the radiation-curable material passage and simultaneously curing the radiation-curable material by directing radiation from at least the first terminal end of the radiation transmitting channel.

All aspects, examples and features mentioned above can be combined in any technically possible way.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a perspective view of an illustrative industrial component in the form of a turbine blade to which teachings of the disclosure may be applied;
FIG. 2 shows a perspective view of an illustrative industrial component in the form of a turbine nozzle to which teachings of the disclosure may be applied;
FIG. 3 shows a schematic view of an injector system for a masking material according to embodiments of the disclosure;
FIG. 4 shows a perspective end view of an injector body of an injector according to embodiments of the disclosure;
FIG. 5 shows a cross-sectional view of an opening having different cross-sectional dimensions;
FIG. 6A shows a perspective end view of an injector body of an injector (similar to that shown in FIG. 4) with openings in a radiation block thereof according to other embodiments of the disclosure;
FIGS. 6B-6E show views of possible alternative shapes of the openings in the radiation block in FIG. 6A according to embodiments of the disclosure;
FIG. 7 shows a perspective end view of an injector body of an injector according to other embodiments of the disclosure;
FIGS. 8A-B show perspective end views of an injector body of an injector according to further embodiments of the disclosure;
FIG. 9 shows a perspective end view of injector body of an injector according to other embodiments of the disclosure;
FIGS. 10A-D show cross-sectional views of an injector body of an injector with first terminal ends of a radiation-curable material passage and a radiation transmitting channel in different axial positions according to various embodiments of the disclosure;
FIG. 11 shows a cross-sectional view of an injector body of an injector (in a respective opening) with a first terminal end of a radiation-curable material passage according to another embodiment of the disclosure;
FIGS. 12A-E show cross-sectional views of an injector body of an injector with different shapes of a first terminal end of a radiation transmitting channel according to various alternative embodiments of the disclosure;
FIG. 13 shows a cross-sectional view of an injector body of an injector according to other embodiments of the disclosure;
FIG. 14A show a cross-sectional view of retracting an injector body of an injector from a respective opening along a linear, coaxial path relative a centerline of the respective opening according to embodiments of the disclosure;
FIG. 14B show a cross-sectional view of retracting an injector body of an injector from a respective opening at a non-parallel angle relative to a centerline of the respective opening according to embodiments of the disclosure;
FIG. 14C shows a cross-sectional view of retracting an injector body of an injector from respective opening in an at least partially non-linear path according to embodiments of the disclosure; and
FIGS. 15A-C show cross-sectional views of the method according to various embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current technology, it will become necessary to select certain terminology when referring to and describing relevant machine components within the illustrative application of an industrial component such as a turbine nozzle or airfoil having openings therein. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the coolant through openings in a turbine component. The term "downstream" corresponds to the direction of flow of the fluid, and the term "upstream" refers to the direction opposite to the flow.

It is often required to describe parts that are at different radial positions with regard to a center axis. The term "axial" refers to movement or position parallel to an axis, e.g., an axis of opening. The term "radial" refers to movement or position perpendicular to an axis, e.g., an axis of an injector body. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. Finally, the term "circumferential" refers to movement or position around an axis, e.g., a circumferential interior surface of opening. As indicated above, it will be appreciated that such terms may be applied in relation to the axis of an opening in a turbine component or other structure.

In addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs or the feature is present and instances where the event does not occur or the feature is not present.

Where an element or layer is referred to as being "on," "engaged to," "connected to," "coupled to," or "mounted to" another element or layer, it may be directly on, engaged, connected, coupled, or mounted to the other element or layer, or intervening elements or layers may be present. In contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

Embodiments of the disclosure include an injector system and a method for masking a plurality of openings in a component. The injector system includes at least one injector having an injector body configured to be positioned within a respective opening of the plurality of openings. Each injector body includes a radiation transmitting channel and a radiation-curable material passage defined in the injector body adjacent to the radiation transmitting channel. The radiation transmitting channel includes a first terminal end and a second opposing end configured to optically communicate with a source of radiation, and the radiation-curable material passage includes a first terminal end, and a second opposing end configured to fluidly communicate with a source of radiation-curable material. A first radiation block is between the channel and the passage to prevent radiation from the channel from entering the passage. The injector system simultaneously, or nearly simultaneously, injects and cures radiation-curable masking material.

The injector system can be controlled in a number of ways to ensure better masking. For example, the material dispensing can be controlled in terms of material type (e.g., viscosity, density, etc.), flow pressure and/or flow rate; the motion of the injector body can be controlled in terms of angle, speed of retraction and/or motion path (e.g., linear, non-linear); and the radiation can be controlled in terms of wavelength, intensity, duration and/or consistency. In addition, the number of dispensing and curing iterations used to mask each opening can be controlled to ensure better masking. The close proximity of the dispensing and curing relative to one another and the control of operation of the injector system can be used to, for example, prevent clogging, enable use with very small diameter openings and provide better masking. In terms of the masking, the injector system provides more complete curing of the masking material away from the exterior surface of the openings, complete filling of the openings, and better adherence to the interior surfaces of the opening.

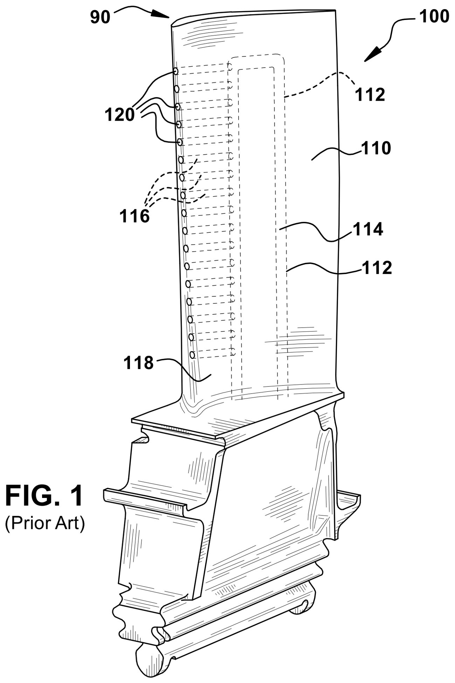

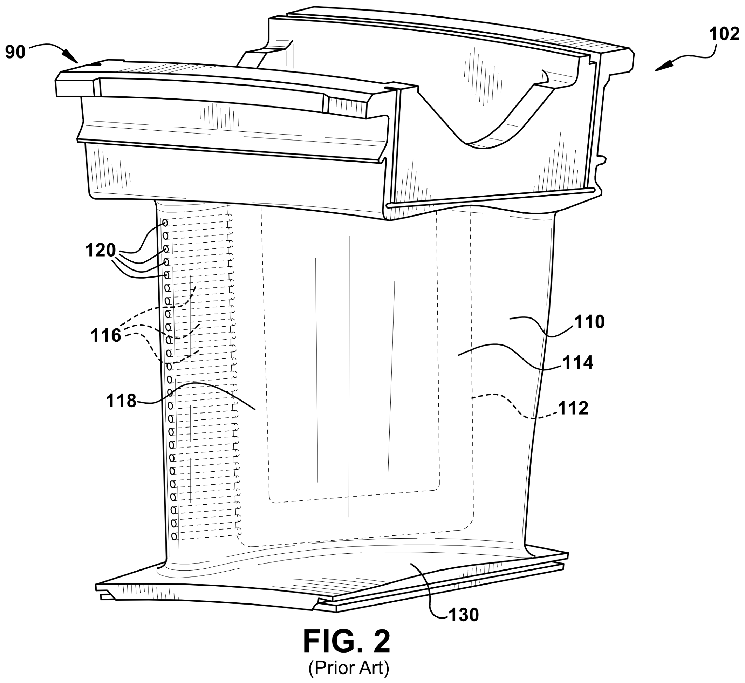

FIGS. 1 and 2 show perspective views of illustrative industrial components 90 for which an injector system (not shown in FIGS. 1-2) for a masking material according to embodiments of the disclosure may be employed. For purposes of description, the illustrative industrial components 90 may include a turbine blade 100 (FIG. 1) or a turbine stationary nozzle 102 (FIG. 2). Each component 90 includes a body 110 that may have one or more central cooling passages 112 defined therein for delivery of a coolant through parts of body 110. In the illustrative components, at least part of body 110 may include an airfoil 114 through which cooling passage(s) 112 extend, but it is understood that the teachings of the disclosure may be applied to a wide variety of other parts of turbine blade 100 or turbine nozzle 102. Cooling passage(s) 112 can take a wide variety of paths through airfoil 114, e.g., sinusoidal, U-shaped, etc. Cooling passage(s) 112 also include sub-passages 116 that deliver coolant to an exterior surface 118 of component 90. Coolant exits components 90 through a plurality of openings 120 provided in exterior surfaces 118 thereof, i.e., so openings 120 are cooling openings. While openings 120 are shown in a particular edge of airfoil 114, e.g., a trailing edge or leading edge, it is recognized that they can be located in a wide variety of locations on component 90. It is understood that each component 90 may include hundreds, perhaps thousands of openings 120. In addition, while openings 120 are shown as cooling openings, i.e., holes, in component 90 for purposes of description, "openings" (referenced with 120 or 134 herein) can take any form of passage, hole, void, cavity, concavity, indentation, dent or other form of opening defined in a material in which masking material is desired. As noted, the masking material is typically placed in openings 120 to prevent damaging material from entering the openings during processing that may follow their initial formation or may take place during maintenance of components 90.

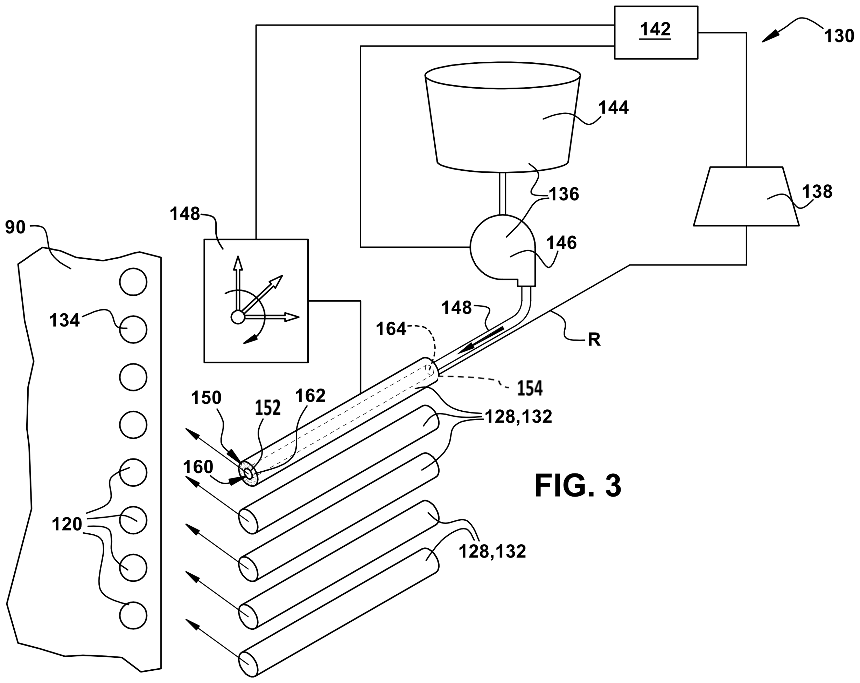

FIG. 3 shows a schematic view of an injector system 130 for masking plurality of openings 120. Injector system 130 includes at least one injector 128 including an injector body 132 configured to be positioned within a respective opening 134 of plurality of openings 120. FIG. 3 shows an example in which injector system 130 includes a plurality of injectors 128 each having an injector body 132; however, a single injector 128 with a single injector body 132 may be used. Hereafter, injector body or bodies 132 will be referenced rather than injector or injectors 128 having injector body or bodies 132 for brevity of description. As will be described further herein, injector system 130 may also include a source of radiation-curable material 136 (hereafter "material source 136"), a source of radiation 138 (hereafter "radiation source 138") and, optionally, an at least semi-automated positioning system 140 (hereafter "positioning system 140"). Injector system 130 may also include a controller 142 operatively coupled to material source 136, radiation source 138 and, where provided, positioning system 140.

Material source 136 may include any now known or later developed reservoir 144 of radiation-curable masking material 148 and a pump 146 to generate a flow of the radiation-curable masking material 148 at a desired flow rate and pressure. Pump 146 may be manually operated or controlled by controller 142. The radiation-curable masking material 148 (hereafter "masking material 148" for brevity) may include any now known or later developed liquid material, such as a resin, which hardens upon exposure to radiation, e.g., visible light, ultraviolet light, or other wavelength radiation. Radiation source 138 may include any now known or later developed radiation R generating system capable of generating the required wavelength and intensity of light required to cure masking material 148. Radiation source 138 may include but is not limited to mercury vapor lamp(s), ultraviolet flood lights, high intensity light emitting diode(s), and/or fluorescent black tube lights. Radiation source 138 may be controlled manually or by controller 142.

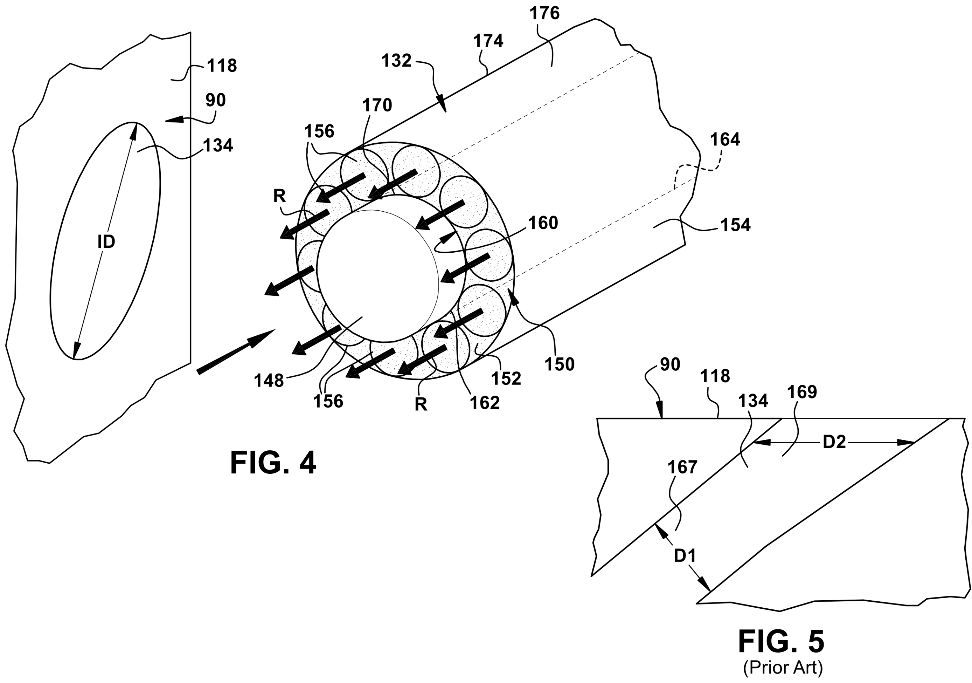

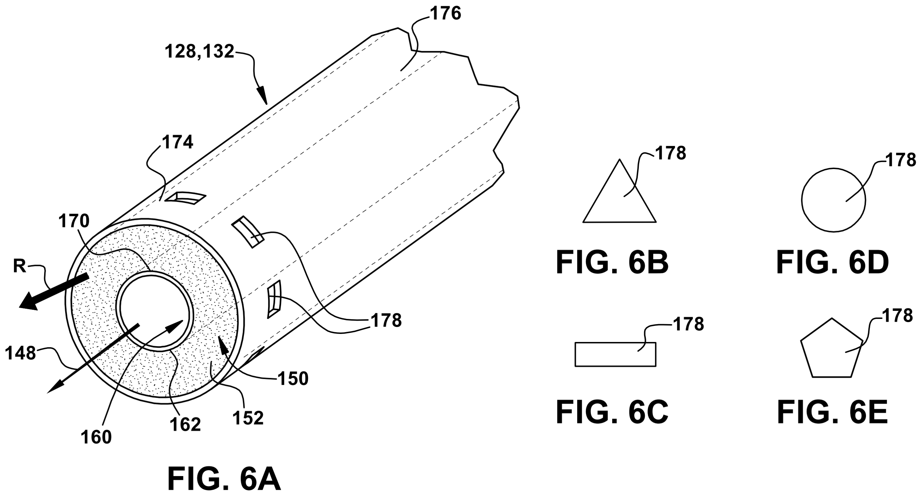

FIG. 4 shows a perspective end view of an illustrative injector body 132 of an injector 128 according to embodiments of the disclosure. Referring to FIGS. 3 and 4, each injector body 132 includes a radiation transmitting channel 150 including a first terminal end 152 and a second opposing end 154. Second, opposing end 154 is upstream from first terminal end 152 and is configured to optically communicate with radiation source 138. Radiation transmitting channel 150 (hereafter "radiation channel 150" for brevity) may include any glass, flexible glass and/or plastic fibers capable of having radiation R transmitted there along. In certain embodiments, as shown in FIG. 4, radiation channel 150 may be segmented into, for example, a plurality of radiation transmitting fibers 156, e.g., fiber optic cables; however, this arrangement is not necessary in all cases, e.g., where radiation channel 150 is a tubular element (see, e.g., FIG. 6). Second, opposing end 154 optically communicates with radiation source 138 using any appropriate optical coupling device to ensure radiation R from radiation source 138 is transmitted through radiation channel 150 and exits at least first terminal end 152 thereof.

Each injector body 132 may also include a radiation-curable material passage 160 defined in injector body 132 adjacent to radiation channel 150. Radiation-curable material passage 160 (hereafter "material passage 160") includes a first terminal end 162 and a second opposing end 164. Second, opposing end 164 is upstream of first terminal end 162 and is configured to fluidly communicate with material source 136, i.e., pump 146. Material passage 160 may include any now known or later developed hollow tube(s), conduit(s), pipe(s) capable of communicating liquid masking material 148 from material source 136. Material passage 160 at second, opposing end 164 may be fluidly connected to, for example, pump 146 in any now known or later developed fashion.

As shown in FIG. 4, each injector body 132 also includes a first radiation block 170 between radiation channel 150 and material passage 160. First radiation block 170 may include any now known or later developed entity configured to prevent radiation R from radiation channel 150 from entering material passage 160 and prematurely curing masking material 148 therein. First radiation block 170 may include a layer of material between otherwise transparent material, the materials that define at least a portion of radiation channel 150 and/or a portion of material passage 160, and/or sufficient space within or between the materials that define at least a portion of radiation channel 150 and/or a portion of material passage 160. Where first radiation block 170 includes material, it may include any now known or later developed material to absorb, scatter and/or block the type of radiation R transmitted in radiation channel 150, e.g., black plastic, or other opaque material that blocks radiation R (e.g., ultraviolet light).

As noted, injector body 132 is configured to be positioned in a respective opening 134. In this regard, injector body 132 may have a maximum outer dimension (OD) smaller than a minimum inner dimension (ID) of a respective opening 134. While injector body 132 and respective opening 134 are shown as circular, they may have different cross-sectional shapes. Opening 134 may have a variety of alternative shapes such as but not limited to oval and trapezoidal. In addition, as understood in the art, opening 134 may have different cross-sectional shapes and/or sizes at different locations along its length. FIG. 5 shows one example of an opening 134 having different cross-sectional shapes and/or sizes for an opening 134. In this example, opening 134 may have an inner metering portion 167 having a first cross-sectional area (at D1) used to meter coolant flow from respective opening 134, and an outer expansion portion 169 having an enlarged or enlarging cross-sectional area (indicated by D2) extending from inner metering portion 167 to exterior surface 118 of component 90 used to allow coolant to expand and spread as it exits respective opening 134. It is recognized that opening 134 may have a large variety of alternative shapes and/or sizes that can be addressed by injector system 130 within the scope of the disclosure.

Each injector body 132 can take a variety of forms. Although injector bodies 132 in FIG. 3 are all shown as the same type, where a plurality of injector bodies 132 are used, their format may vary depending, for example, on the respective opening 134 in which used. In certain embodiments, such as that shown in FIG. 4, radiation channel 150 and material passage 160 are coaxial with one another, i.e., they have the same center axis. In more particular embodiments, radiation channel 150 and material passage 160 are concentrically arranged relative to one another, i.e., they have the same center axis with the larger or outer entity surrounding and parallelling the other, inner entity. In the FIG. 4 version, material passage 160 is within radiation channel 150. As noted, first radiation block 170 prevents radiation R in radiation channel 150 from curing masking material 148 in material passage 160 until it exits first terminal end 162 of material passage 160 within respective opening 134. In this embodiment, injector body 132 may further include a second radiation block 174 configured to prevent radiation R from exiting from an exterior surface 176 of radiation channel 150 into respective opening 134. Second radiation block 174 prevents radiation R that may exit exterior surface 176 from curing masking material 148 prior to a desired location, e.g., upstream of terminal ends 152, 162 of radiation channel 150 and material passage 160, respectively. Second radiation block 174 may include any of the entities listed herein for first radiation block 170, e.g., the material of radiation channel 150 or a layer of radiation block material, or another material capable of blocking radiation.

FIG. 6A shows a perspective end view of injector body 132 similar to that shown in FIG. 4. In certain embodiments, as shown in FIG. 6A, second radiation block 174 may include a plurality of radiation passages 178 therein allowing radiation R from exiting from select locations from the exterior surface 176 of radiation channel 150 into the respective opening 134, i.e., in addition to and upstream of first terminal end 152 of radiation channel 150. Radiation passages 178 allow a predefined amount and shape of radiation R from exiting second radiation block 174, e.g., where it is a layer of opaque material or the material that defines material passage 160, upstream of first terminal end 152 of radiation channel 150 and upstream of first terminal end 162 of material passage 160. Each radiation passage 178 may have any predefined cross-sectional area and shape. In FIG. 6A, radiation passages 178 are square. FIGS. 6B-6E show views of possible alternative shapes of radiation passages 178. FIG. 6B shows a triangular shape, FIG. 6C shows a rectangular shape, FIG. 6D shows a circular or oval shape, and FIG. 6E shows a pentagonal shape. Other shapes are also possible. The number of radiation passages 178 and their circumferential spacing around injector body 132 can be used to obtain the desired curing of masking material 148 (FIG. 6), as will be further described herein. The axial location of radiation passages 178 on injector body 132, i.e., distance from first terminal end(s) 152, 162 may also be used to obtain the desired curing masking material 148. While one row of radiation passages 178 is shown in FIG. 6A, radiation passage(s) 178 can be provided at more than one axial location on injector body 132. Radiation passage(s) 178 can take a variety forms depending on the form of second radiation block 174, for example, an opening in an opaque layer where second radiation block 174 includes an opaque layer, or transparent material window embedded in the otherwise opaque material of second radiation block 174.

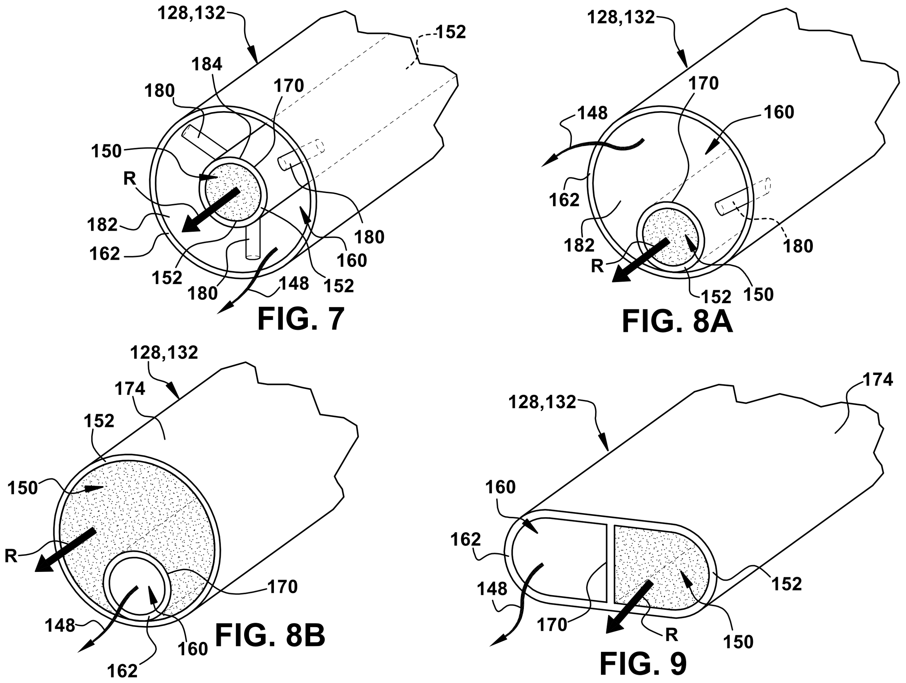

FIG. 7 shows a perspective end view of an injector body 132 according to other embodiments of the disclosure. In FIG. 7, in contrast to FIGS. 4 and 6a, radiation channel 150 is within material passage 160. In this embodiment, first radiation block 170 is between radiation channel 150 and material passage 160, but second radiation block 174 may not be necessary. Any number and variety of supports 180 may radially position material passage 160 around radiation transmitting channel 150. The radial distance of an inner surface 182 of material passage 160 from an outer surface 184 of radiation channel 150 can be used to control, among other things, the volume and/or direction of flow of masking material 148. Supports 180 can have any cross-sectional shape to foster masking material 148 flow therearound, e.g., circular, ellipse, airfoil, triangular, etc.

FIGS. 8A-B and 9 show perspective end views of injector body 132 according to other embodiments. While material passage 160 is coaxial and concentric with radiation channel 150 in FIGS. 4, 6A and 7, in certain embodiments, they may be non-coaxial. In FIG. 8A, radiation channel 150 is within material passage 160, but radiation channel 150 is closer to inner surface 182 of material passage 160 in certain region(s) than others, so they are non-coaxial. In FIG. 8B, material passage 160 is within radiation channel 150, but they are also arranged in a non-coaxial manner. In FIG. 8B, material passage 160 is not centered within the material of radiation channel 150.

In FIG. 9, material passage 160 is laterally adjacent radiation channel 150, and vice versa. While shown as two half-ellipse shapes, material passage 160 and radiation channel 150 may have different shapes depending on the shape of opening 134 (FIG. 4) into which injector body 132 is positioned, e.g., half-circles, half-rectangles/squares, half-trapezoids. In addition, radiation channel 150 and material passage 160 do not need to be the same shape, e.g., one could be polygonal and one a half-circle. The combined exterior shape should be able to be inserted/mate within a respective opening 134 (FIG. 4). In FIG. 9, first radiation block 170 prevents radiation R from reaching masking material 148 in material passage 160 prior to its exit from first terminal end 162 of material passage 160, and second radiation block 174 prevents radiation R from exiting radiation channel 150 upstream first terminal end 152 thereof. Any arrangement of radiation passage(s) 178, as described relative to FIGS. 6A-6E, may also be used with the FIGS. 8A and 9 embodiments.

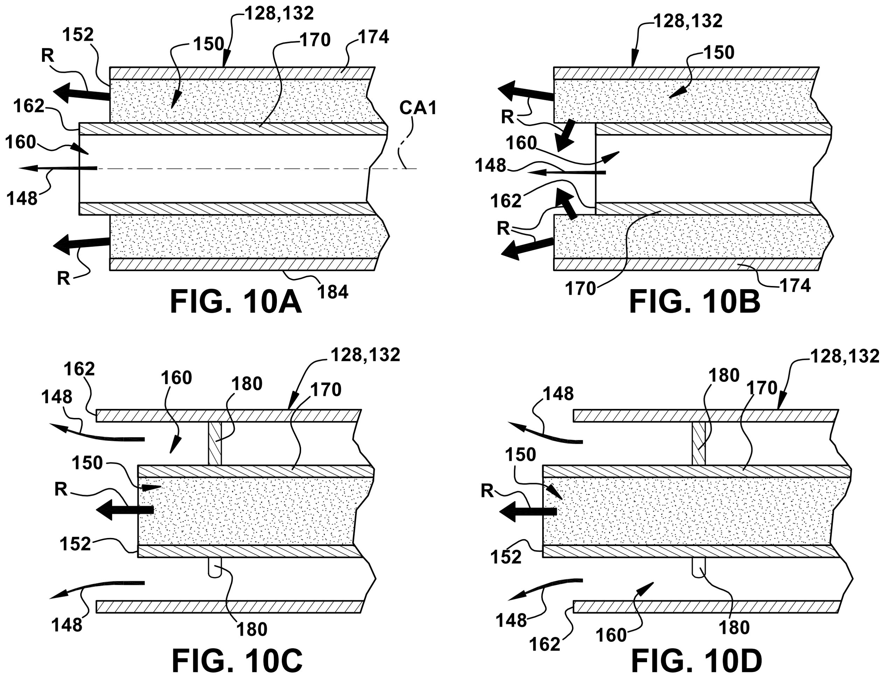

In previous embodiments, first terminal ends 152, 162 of radiation channel 150 and material passage 160 are shown as coplanar on injector body 132 such that radiation R exits radiation channel 150 at substantially the same axial location as masking material 148 exits material passage 160. Referring to the cross-sectional views of FIGS. 10A-D, in other embodiments, one of first terminal ends 152, 162 of radiation channel 150 and material passage 160 may be upstream of the other of first terminal ends 162, 152 of radiation channel 150 and material passage 160. In FIGS. 10A-B, material passage 160 is within radiation channel 150 (as in FIGS. 4 and 6A). In FIG. 10A, first terminal end 152 of radiation channel 150 is upstream of first terminal end 162 of material passage 160, so radiation R exits injector body 132 axially upstream to masking material 148 exiting material passage 160. In FIG. 10B, first terminal end 162 of material passage 160 is upstream of first terminal end 152 of radiation channel 150, so masking material 148 exits injector body 132 axially upstream to radiation R exiting radiation channel 150. In FIGS. 10C-D, radiation channel 150 is within material passage 160 (as in FIG. 7). In FIG. 10C, first terminal end 152 of radiation channel 150 is upstream of first terminal end 162 of material passage 160, so radiation R exits injector body 132 axially upstream to masking material 148 exiting material passage 160. In FIG. 10D, first terminal end 162 of material passage 160 is upstream of first terminal end 152 of radiation channel 150, so masking material 148 exits injector body 132 axially upstream to radiation R exiting radiation channel 150. The different axial locations for first terminal ends 152, 162 may also be used with the non-coaxial arrangements of FIGS. 8A-B and 9.

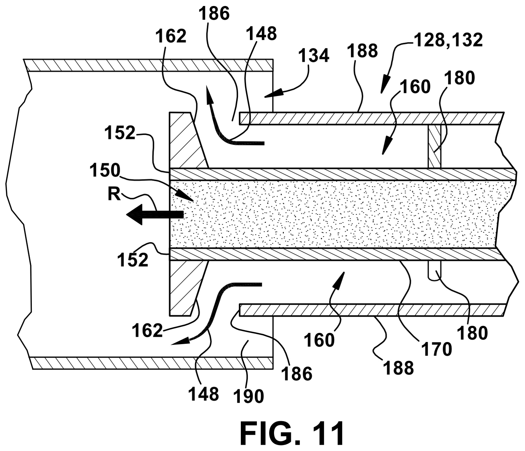

FIG. 11 shows a cross-sectional view of injector body 132 in a respective opening 134 according to another embodiment. In FIG. 11, radiation channel 150 is within material passage 160 (as in, e.g., FIG. 7), and first terminal end 162 of material passage 160 is axially upstream of first terminal end 152 of radiation channel 150. Therefore, in FIG. 11, as in FIGS. 10C-D, masking material 148 exits injector body 132 axially upstream to radiation R exiting radiation channel 150. However, in FIG. 11, first terminal end 162 of material passage 160 directs masking material 148 radially outward rather than generally axially as in earlier described embodiments. More particularly, first terminal end 162 may include one or more openings 186 in an outer surface 188 of material passage 160. The FIG. 11 embodiment may be used where at least some space 190 exists between outer surface 188 of material passage 160 (and injector body 132) and an inner surface 192 of respective opening 134.

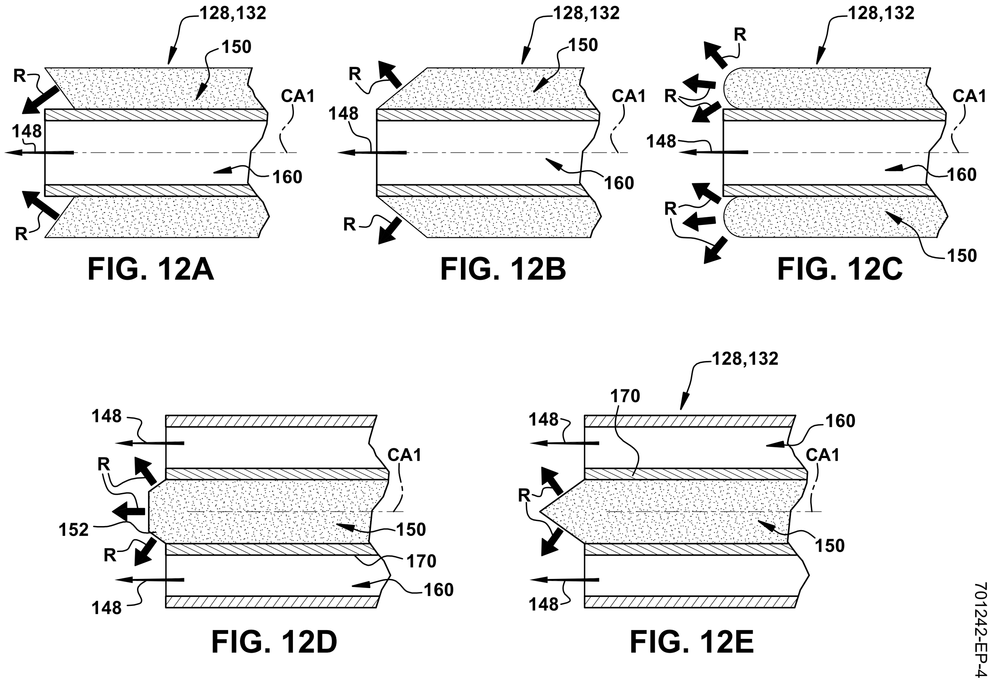

In the previously described embodiments, as shown in FIG. 10A for example, first terminal end 152 of radiation channel 150 is generally shown as extending perpendicular to a centerline CA1 of injector body 132. However, first terminal end 152 of radiation channel 150 can have any shape desired to direct radiation R in a desired manner to cure masking material 148. FIGS. 12A-C show cross-sectional views of injector body 132 with first terminal end 152 of radiation channel 150 shaped according to various alternative embodiments. In FIGS. 12A-C, material passage 160 is within radiation channel 150. In FIG. 12A, first terminal end 152 of radiation channel 150 is angled to direct radiation R radially inwardly relative to centerline CA1 of injector body 132. In FIG. 12B, first terminal end 152 of radiation channel 150 is angled to direct radiation R radially outwardly relative to centerline CA1 of injector body 132. In FIG. 12C, first terminal end 152 of radiation channel 150 is bulbous to direct radiation R radially inwardly and outwardly relative to centerline CA1 of injector body 132. First terminal end 152 of radiation channel 150 in FIG. 12C could also be coned-shaped similar to that shown in FIG. 12E. In FIGS. 12D-E, radiation channel 150 is within material passage 160. In FIG. 12D, first terminal end 152 of radiation channel 150 is bulbous to direct radiation R radially inwardly and outwardly relative to centerline CA1 of injector body 132. In FIG. 12E, first terminal end 152 of radiation channel 150 is pointed or cone-shape to direct radiation R radially inwardly and outwardly relative to centerline CA1 of injector body 132. It will be recognized that first terminal end 152 of radiation channel 150 can have a variety of alternative shapes (not shown) to direct radiation R in a desired direction to obtain the desired curing of masking material 148. While not shown in detail herein, it will be recognized that first terminal end 162 of material passage 160 may also be shaped to direct liquid masking material 148 in any desired direction and manner to ensure the desired masking characteristics.

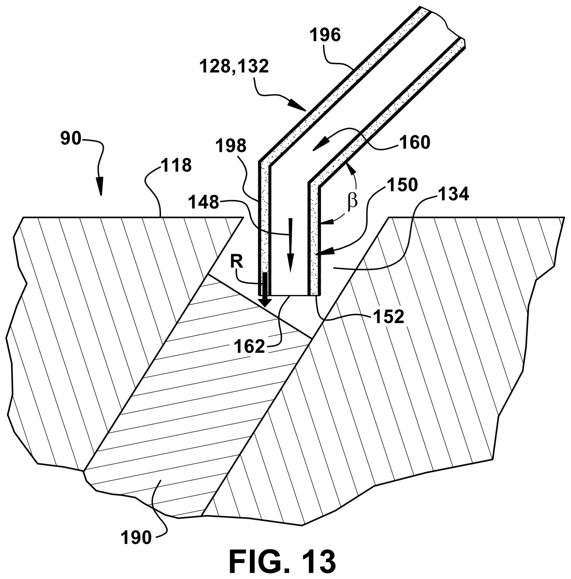

FIG. 13 shows a cross-sectional view of injector body 132 of injector 128 according to other embodiments of the disclosure. In this embodiment, a first, upstream, or backward, portion 196 of injector body 132 may be angled relative to a second, downstream, or forward, portion 198 of injector body 132. In this manner, first terminal ends 152, 162 of radiation channel 150 and material passage 160 are also non-perpendicularly angled relative to upstream portion 196 of injector body 132. This approach may allow, for example, an injector body 132 to be positioned in a respective opening 134 that is similarly angled or curved. The angle β between upstream and downstream portions 196, 198 can be chosen based on, for example, the shape of respective opening 134 and to complement respective opening 134 relative to surface 118 and allow dispensing of masking material therein.

Masking can be controlled and customized in a wide variety of ways according to embodiments of the disclosure. First, the characteristics of masking material 148 used may be selected to control certain masking parameters. For example, masking material 148 can be selected to provide certain masking characteristics, such as but not limited to adherence to the material of component 90 (FIGS. 1-2), expansion/contraction from curing, viscosity, density, etc.

Additionally, returning to FIG. 3, as noted, injector system 130 may also include controller 142 configured to control dispensing of masking material 148 through first terminal end 162 of material passage 160 and control radiation R transmission from at least first terminal end 152 of radiation channel 150, to cure masking material 148 in respective opening 134. In certain embodiments, controller 142 can be manually operated by a human, e.g., like an electric caulk gun. In this case, each of one or more injector bodies 132 can be arranged to be manually positioned in a respective opening 134 of perhaps plurality of openings 120. Some form of trigger (not shown) can be provided that causes controller 142 to execute a predefined sequence of masking material 148 dispensing and radiation R transmission through each injector body 132 as the one or more injector bodies 132 are retracted from their respective openings 134.

Alternatively, positioning system 140 may be used to at least semi-automatically position each of one or more injector bodies 132 in a respective opening 134 of perhaps plurality of openings 120. In certain embodiments, positioning system 140 may include any now known or later developed form of fully-automated robot that does not require human interaction. Alternatively, positioning system 140 may include any now known or later developed semi-automated collaborative robot that requires some human interaction. A semi-automated collaborative robot may assist, replace or augment human activity, autonomously or otherwise. For example, a collaborative robot may assist with lifting and/or positioning numerous injector bodies 132 and related connections, e.g., masking material delivery tubes, fiber optic cables, etc., or may perform certain actions to rectify a blockage perhaps with some human intervention. In any event, as shown in FIG. 3, at least semi-automated positioning system 140 is configured to position first terminal ends 152, 162 of one or more injector bodies 132 within respective opening 134. Positioning system 140 with injector bodies 132 (and perhaps under control of controller 142) is also configured to mask the respective opening 134 by retracting injector body 132 from the respective opening 134 while dispensing masking material 148 from first terminal end 162 of material passage 160 and perhaps simultaneously cure masking material 148 using radiation R exiting from at least first terminal end 152 (and perhaps radiation passages 178) of radiation channel 150. Once outside exterior surface 118 of component 90, positioning system 140 may also move one or more injector bodies 132 to mask any shape a respective opening 134 may have at exterior surface 118 of component 90, e.g., cylindrical, conical, trapezoidal. As the different types of positioning systems 140 are well known in the art, no further details are necessary for understanding by those with skill in the art.

Regardless of whether injector system 130 is fully-automated, semi-automated or manually operated, controller 142 can control operation of injector bodies 132 and/or positioning system 140 in a wide range of ways. As noted, controller 142 may be configured to execute a predefined sequence of masking material 148 dispensing and radiation R transmission through each injector body 132 as the one or more injector bodies 132 are retracted from their respective openings 134. Where positioning system 140 is used, controller 142 may also control parameters of the retraction of injector body(is) 132 from respective opening(s) 134, e.g., speed and/or path. For example, controller 142 can control flow pressure and/or flow rate of masking material 148.

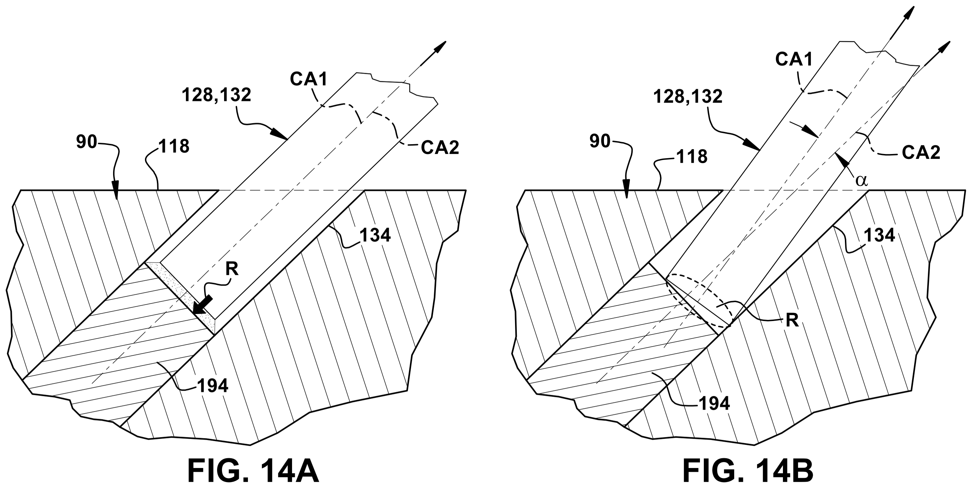

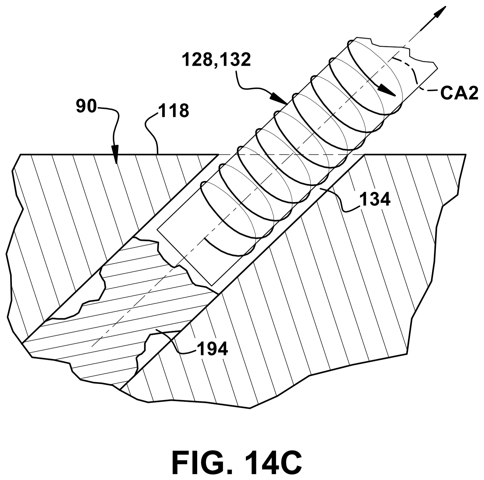

Further, controller 142, via positioning system 140 (FIG. 3), can also control parameters of the retraction of each injector body 132 from respective opening 134. FIG. 14A-C show cross-sectional view of injector body 132 being retracted from a respective opening 134 leaving a cured masking material 194 according to various embodiments of the disclosure. Controller 142, via positioning system 140, can control the speed of retraction of each injector body 132 from respective opening 134. In addition, controller 142, via positioning system 140, can control a path of retraction of each injector body 132 from respective opening 134. FIGS. 14A-B show retraction of one or more injector bodies 132 along an at least partially linear path, and FIG. 14C shows one example of retraction of one or more injector bodies 132 along an at least partially non-linear path, i.e., it is non-linear at one or more segments along its retraction path. FIG. 14A shows positioning system 140 retracting an injector body 132 having a centerline CA1 from respective opening 134 in a linear, coaxial path relative to a centerline CA2 of the respective opening 134.

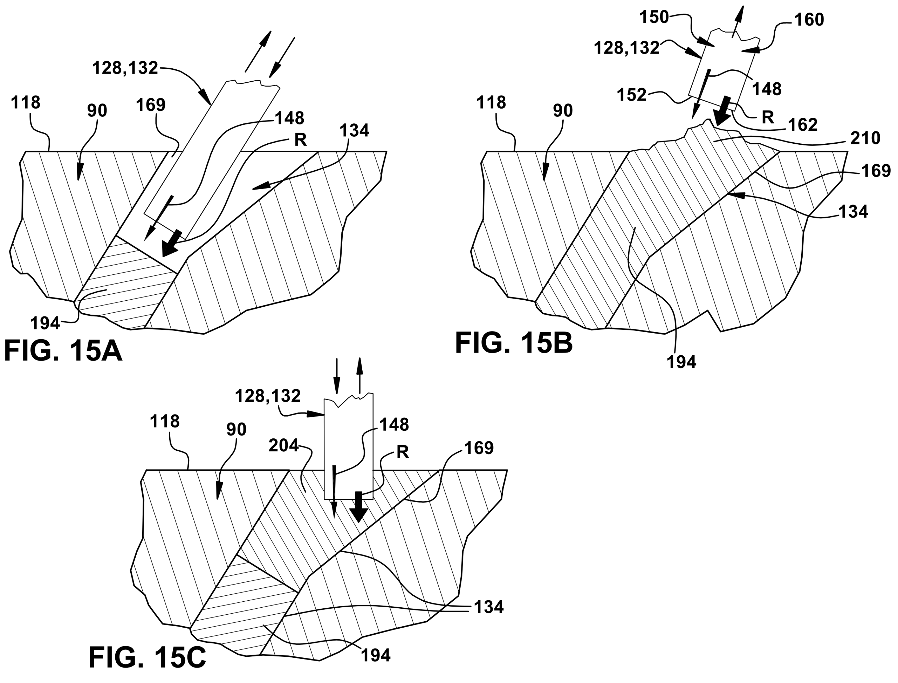

In contrast, FIG. 14B shows positioning system 140 retracting an injector body 132 having a centerline CA1 from respective opening 134 in a non-parallel angle α relative a centerline CA2 of the respective opening 134. More particularly, in FIG. 14B, positioning system 140 retracts injector body 132 in a non-coaxial, angled path from respective opening 134, i.e., with centerline CA1 of injector body 132 angled at an acute angle α relative to centerline CA2 of respective opening 134. Acute angle α can be any desired angle at which injector body 132 can be retracted without damage to component 90 or itself. In certain embodiments, acute angle α may be between 1° and 20°. In other embodiments, acute angle α may be between 2° and 20°. It will be recognized, however, that acute angle α may be as large as 90°. A larger angle α may be used, for example, as shown in FIG. 15B, when injector body 132 is outside of exterior surface 118 of component 90 and is finishing masking a respective opening 134. The linear, non-coaxial, angled retraction may provide better masking by bringing masking material 148 closer to more difficult areas to mask a given opening 134 configuration.

FIG. 14C shows positioning system 140 retracting injector body 132 having a centerline CA1 from respective opening 134 in an at least partially non-linear path. More particularly, in the example shown, injector body 132 may be retracted in an at least partially helical path from respective opening 134, i.e., spirally around a centerline CA2 of respective opening 134. It will be recognized that the retraction paths described are only illustrative and that other retraction paths can be provided by controller 142 with positioning system 140. In addition, the paths described herein can be combined in any manner, e.g., partially linear and coaxial, partially linear and angled and/or partially non-linear.

Controller 142, via pump 146 (FIG. 1), may also control flow of liquid masking material 148. For example, controller 142 may be configured to stop dispensing masking material 148 through first terminal end 162 of material passage 160 and continue radiation R transmission from at least the first terminal end 152 of radiation channel 150. Subsequently, masking material 148 flow may be re-started. This approach may allow, for example, temporarily providing additional radiation R exposure to cure liquid masking material 148 in an area that is difficult to cure, and then perhaps continue with normal operation.

Controller 142, using radiation source 138 (FIG. 3), may also control radiation R provided by injector body 132 during operation. For example, radiation R can be controlled in terms of wavelength, intensity, duration and/or consistency. In certain embodiments, controller 142 may temporarily stop radiation R transmission from at least first terminal end 152 of radiation channel 150 during dispensing of masking material 148 through first terminal end 162 of material passage 160. This approach may allow, for example, more time for liquid masking material 148 to flow into a hard-to-reach area without immediately being cured, and then perhaps continue normal operation.

A method for masking plurality of openings 120 (FIGS. 1-3) in component 90 (FIGS. 1-3) will now be described. FIGS. 15A-C show cross-sectional views of the method according to various embodiments of the disclosure. The method may include a repeated set of processes. As described herein the method may include as shown, for example, in FIG. 15A, positioning an injector 128 including injector body 132 within a respective opening 134 of perhaps plurality of openings 120. Injector body 132 may include any of the structures described herein. The method may also include, as shown in FIG. 15B, masking at least a portion of respective opening 134 by retracting injector body 132 from respective opening 134 while dispensing masking material 148 from first terminal end 162 of material passage 160 and (perhaps simultaneously) cure masking material 148 by directing radiation R from at least first terminal end 152 of radiation channel 150. The process shown in FIGS. 15A-B may be repeated individually for a plurality of openings 120. Alternatively, or in addition thereto, the process shown in FIGS. 15A-B can be repeated simultaneously for a plurality of openings 120 - see e.g., FIG. 3. As noted previously, the masking can be controlled in a variety of ways. For example, the method may include temporarily stopping radiation R transmission from at least first terminal end 152 of radiation channel 150 during dispensing of masking material 148 through first terminal end 162 of material passage 160. Alternatively, or in addition thereto (perhaps at another time), the method may include stopping dispensing masking material 148 through first terminal end 162 of material passage 160 while continuing radiation R transmission from at least first terminal end 152 of radiation channel 150. The method may optionally include, as shown in FIG. 14B, retracting injector body 132 from respective opening 134 at a non-parallel angle α relative to a centerline CA2 of respective opening 134. The method may optionally include, as shown in FIG. 14C, retracting injector body 132 from respective opening 134 along an at least partially non-linear path, e.g., at least partially helical.

With reference to FIG. 15A and 15C, the method may also include repeated masking steps within a single, respective opening 134. In one example of repeated masking steps for a single opening, the method may include first positioning injector 128 including injector body 132 within an inner metering portion 167 of respective opening 134 of plurality of openings 120 (FIGS. 1-3) and first masking of inner metering portion 167 of respective opening 134. As explained relative to FIG. 5, inner metering portion 167 (FIG. 5) may have a first cross-sectional area (at D1) used to meter coolant flow from respective opening 134, and outer expansion portion 169 having an enlarged or enlarging cross-sectional area (indicated by D2) extending from inner metering portion 167 to exterior surface 118 of component 90 used to allow coolant to expand and spread as it exits respective opening 134. In any event, this first masking step, as shown in FIG. 15A, may use a first type of masking material 148 and/or first masking parameters, as described herein, to create first cured masking material 194. As shown in in FIG. 15C, the method may also include second positioning injector 128 including injector body 132 within outer expansion portion 169 of respective opening 134 of plurality of openings 120 (FIGS. 1-3) and second masking of outer expansion portion 169 of respective opening 134. This second masking step, as shown in FIG. 15C, may use a second, different type of masking material 148 and/or a second, different masking parameters, as described herein, to create a second cured masking material 204 having different characteristics than first cured masking material 194. The different masking parameters used for each of the masking steps of FIGS. 15A, 15C can vary widely and may include any of the masking parameters described herein. For example, the masking steps may use different masking material 148, different masking material 148 dispensing parameters, e.g., pressure, flow rate, etc. and/or different radiation R transmission parameters, e.g., wavelength, intensity, duration and/or consistency. The different masking parameters used can be customized for the particular shape and/or size of the opening 134 at any given location along its length.

It is emphasized that the example shown in FIGS. 15A, 15C is just one example of how different masking steps within a given opening 134 can be applied, and two or more masking steps for a given opening 134 using different masking parameters as described herein can be applied to address a large variety of masking challenges.

Referring again to FIG. 15B, the method, i.e., the masking, may also include forming a mask portion 210 beyond exterior surface 118 of component 90 at respective opening 134 by retracting injector body 132 beyond exterior surface 118 while dispensing masking material 148 from the first terminal end 162 of material passage 160 and (perhaps simultaneously) curing radiation-curable material 148 by directing radiation R from at least first terminal end 152 of radiation transmitting channel 150. Due to the perhaps simultaneous or near simultaneous dispensing and curing, mask portion 210 may protrude from respective opening 134 beyond a point limited by the surface tension of masking material 148. That is, because mask portion 210 is cured as dispensed simultaneously or near simultaneously, it can extend from exterior surface 118 and/or respective opening 134 farther than if masking material 134 was dispensed to a maximum distance allowed by its surface tension in a liquid form and then cured. Mask portion 210 may thus provide a larger volume of cured masking material 194 outside of component 90 which can be advantageous for, for example, purposes of removal of cured masking material 194 from openings 120 by gripping and/or pulling.

Embodiments of the disclosure provide various technical and commercial advantages, examples of which are discussed herein. The injector system can be controlled in a wide variety of ways to ensure better masking. For example, the material dispensing can be controlled in terms of flow pressure and/or flow rate; the motion of the injector body can be controlled in terms of angle, speed of retraction and/or motion path (e.g., linear, non-linear); and the radiation can be controlled in terms of wavelength, intensity, duration and/or consistency. In addition, the number of dispensing and curing iterations used to mask each opening can be controlled to ensure better masking. The close proximity of the dispensing and curing relative to one another and the control of operation of the injector system can be used to, for example, prevent clogging, enable use with very small diameter openings and provide better masking. In terms of the masking, the injector system provides more complete curing of the masking material away from the exterior surface of the openings, complete filling of the openings, and better adherence to the interior surfaces of the opening.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. The herein claimed invention is defined by the appended claims. Many modifications and variations will be apparent to those of ordinary skill in the art without departing from the scope of the disclosure. The embodiments were chosen and described in order to best explain the principles of the disclosure and the practical application of the technology and to enable others of ordinary skill in the art to understand the disclosure for contemplating various modifications to the present embodiments, which may be suited to the particular use contemplated.

## Claims

1. An injector system (130) for masking a plurality of openings (134) in a component, the injector system comprising:
at least one injector body (132), at least a forward portion thereof configured to be positioned within a respective opening (134) of the plurality of openings, each injector body including:
a radiation transmitting channel (150) including a first terminal end (152) proximate a forward end of the injector body and a second opposing end (154) configured to optically communicate with a source of radiation (138);
a radiation-curable material passage (160) defined in the injector body adjacent to the radiation transmitting channel, the radiation-curable material passage including a first terminal end (162) proximate a forward end of the injector body and a second opposing end (164) configured to fluidly communicate with a source of radiation-curable material (136); and
a first radiation block (170) between the radiation transmitting channel and the radiation-curable material passage, the first radiation block configured to prevent radiation from the radiation transmitting channel from entering the radiation-curable material passage.

2. The injector system of claim 1, wherein the radiation transmitting channel (150) and the radiation-curable material passage (160) are concentrically arranged relative to one another.

3. The injector system of claim 2, wherein the radiation-curable material passage (160) is within the radiation transmitting channel (150), the system further comprising a second radiation block (174) configured to prevent radiation from exiting from an exterior surface of the radiation transmitting channel into a respective opening when the at least forward portion of the respective injector body is positioned within the respective opening.

4. The injector system of claim 3, wherein the second radiation block (174) includes a plurality of openings therein allowing radiation from exiting from select locations from the exterior surface of the radiation transmitting channel into a respective opening when the at least forward portion of the respective injector body is positioned within the respective opening.

5. The injector system of any of claims 2 through 4, wherein the radiation transmitting channel (150) is within the radiation-curable material passage (160).

6. The injector system of any preceding claim, wherein one of the first terminal ends (152, 162) of the radiation transmitting channel (150) and the radiation-curable material passage (160) is set back from the other of the first terminal ends (152, 162) of the radiation transmitting channel (150) and the radiation-curable material passage (160) towards the respective second opposing end (154, 164).

7. The injector system of any preceding claim, wherein the injector body (132) includes a first, backward portion (196) angled relative to a second, forward portion (198) thereof.

8. The injector system of any preceding claim, further comprising a controller (142) configured to control dispensing of the radiation-curable material through the first terminal end of the radiation-curable material passage, and control radiation transmission from at least the first terminal end of the radiation transmitting channel to cure the radiation-curable material in the respective opening, wherein in particular the controller is configured to temporarily stop radiation transmission from at least the first terminal end of the radiation transmitting channel during dispensing of the radiation-curable material through the first terminal end of the radiation-curable material passage and/or the controller is configured to stop dispensing the radiation-curable material through the first terminal end of the radiation-curable material passage and continue radiation transmission from at least the first terminal end of the radiation transmitting channel.

9. The injector system of any preceding claim, further comprising an at least semi-automated positioning system (140) configured to:
position at least the forward portion of the injector body comprising the first terminal ends (152, 162) of the radiation transmitting channel (150) and the radiation-curable material passage (160) within the respective opening (134), and
mask the respective opening by retracting the injector body from the respective opening while dispensing the radiation-curable material from the first terminal end of the radiation-curable material passage and simultaneously cure the radiation-curable material using radiation exiting from at least the first terminal end of the radiation transmitting channel, wherein in particular the at least semi-automated positioning system is configured to retract the injector body from the respective opening at a non-parallel angle relative to a centerline of the respective opening and/or the positioning system is configured to retract the injector body from the respective opening along an at least partially non-linear path.

10. The injector system of any preceding claim, wherein the at least one injector body (132) includes a plurality of injector bodies configured to be positioned within a respective plurality of openings.

11. A method for masking a plurality of openings (134) in a component, the method comprising:
repeatedly:
positioning at least a forward portion of at least one injector body (132) within a respective opening of the plurality of openings, the injector body including:
a radiation transmitting channel (150) including a first terminal end (152) proximate a forward end of the injector body and a second opposing end (154) configured to optically communicate with a source of radiation;
a radiation-curable material passage (160) defined in the injector body adjacent to the radiation transmitting channel, the radiation-curable material passage including a first terminal end (162) proximate the forward end of the injector body and a second opposing end (164) configured to fluidly communicate with a source of radiation-curable material; and
a first radiation block (170) between the radiation transmitting channel and the radiation-curable material passage, the first radiation block configured to prevent radiation from the radiation transmitting channel from entering the radiation-curable material passage; and
masking at least a portion of the respective opening by retracting the injector body from the respective opening while dispensing the radiation-curable material from the first terminal end of the radiation-curable material passage and cure the radiation-curable material by directing radiation from at least the first terminal end of the radiation transmitting channel.

12. The method of claim 11, further comprising temporarily stopping radiation transmission from at least the first terminal end (152) of the radiation transmitting channel (150) during dispensing of the radiation-curable material through the first terminal end (162) of the radiation-curable material passage (160).

13. The method of any of claims 11 or 12, further comprising stopping dispensing the radiation-curable material through the first terminal end (162) of the radiation-curable material passage (160) while continuing radiation transmission from at least the first terminal end (152) of the radiation transmitting channel (150).

14. The method of any of claims 11 through 13, wherein retracting the injector body (132) from the respective opening (134) occurs at a non-parallel angle relative to a centerline of the respective opening. and/or along an at least partially non-linear path.

15. The method of any of claims 11 through 14, wherein the positioning and the masking includes:
first positioning the injector including the injector body (132) within an inner portion of the respective opening of the plurality of openings and first masking of the inner portion of the respective opening; and
second positioning the injector including the injector body within an outer portion of the respective opening of the plurality of openings and second masking of the outer portion of the respective opening.
